# EUROPEAN PATENT APPLICATION

(11) **EP 4 181 261 A1**
(43) Date of publication of application: **17.05.2023**
(21) Application number: 20945392.7
(22) Date of filing: 14.07.2020
(51) Int. Cl.: H01M 10/0562, H01M 4/62, H01M 4/36, H01M 4/525, H01M 4/505, H01M 10/052

(54) **ALL-SOLID-STATE BATTERY COMPRISING OXIDE-BASED SOLID ELECTROLYTE FOR LOW-TEMPERATURE SINTERING PROCESS, AND METHOD FOR MANUFACTURING SAME**

(30) Priority: 13.07.2020 KR 20200086147
(71) Applicant: LG Energy Solution, Ltd., Seoul 07335 (KR); Tokyo Metropolitan Public University Corporation, Shinjuku-ku Tokyo 160-0023 (JP)
(72) Inventor: PARK, Seung Won, Daejeon 34122 (KR); KANAMURA, Kiyoshi, Hachioji-shi, Tokyo 192--0397 (JP); HAN, Hyea Eun, Daejeon 34122 (KR); HAH, Hoe Jin, Daejeon 34122 (KR)
(74) Representative: Goddar, Heinz J.
(86) International application number: PCT/KR2020/009265
(87) International publication number: WO 2022/014736

(57) **Abstract**

The present invention relates to an oxide-based solid electrolyte for low-temperature sintering process and a method of manufacturing the same, and more particularly to a low-temperature sintering process having no problem of side reaction between a positive electrode active material and an oxide-based solid electrolyte through use of a low-melting point dissimilar oxide and a method of manufacturing an all-solid-state battery including a positive electrode manufactured thereby.

## Description

### [Technical Field]

This application claims the benefit of priority to Korean Patent Application No. 2020-00086147 filed on July 13, 2020, the disclosure of which is incorporated herein by reference in its entirety.

The present invention relates to an all-solid-state battery including an oxide-based solid electrolyte for a low-temperature sintering process and a method of manufacturing the same. More particularly, the present invention relates to an all-solid-state battery including an oxide-based solid electrolyte layer, a positive electrode comprising an oxide-based solid electrolyte, and an negative electrode, wherein at least one of the oxide-based solid electrolyte and positive electrode active material particles of the positive electrode is coated with a dissimilar oxide and wherein the oxide-based solid electrolyte and the positive electrode are sintered at 700°C or less, and a method of manufacturing the same.

### [Background Art]

A lithium ion secondary battery has advantages in that the lithium ion secondary battery has higher energy density, a lower self-discharge rate, and a longer lifespan than a nickel manganese secondary battery or a nickel cadmium secondary battery. On the other hand, a safety-related problem due to overheating and a lowoutput problem are pointed out as disadvantages of the lithium ion secondary battery.

In order to solve problems of the lithium ion secondary battery, an all-solid-state battery is presented as an alternative. The all-solid-state battery may be configured to have a structure in which a positive electrode including a solid electrolyte and a negative electrode are formed on opposite surfaces of a solid electrolyte layer including a solid electrolyte. A current collector may be joined to each electrode (layer).

Based on the raw material of the solid electrolyte, the all-solid-state battery may be classified as an oxide-based all-solid-state battery, a polymer-based all-solid-state battery, or a sulfide-based all-solid-state battery. An oxide-based solid electrolyte is classified as a crystalline solid electrolyte or an amorphous solid electrolyte. The crystalline solid electrolyte has higher ionic conductivity than the amorphous solid electrolyte, and therefore the crystalline solid electrolyte has attracted attention as a solid electrolyte for next-generation batteries. Thereamong, a garnet-like solid electrolyte has high stability at a high temperature while having high ionic conductivity, and therefore much attention has been focused on the garnet-like solid electrolyte.

Despite the above advantages, the garnet-like solid electrolyte has a disadvantage of poor wettability with lithium metal due to point contact with the lithium metal. Since wettability with the lithium metal is poor, interfacial resistance between the garnet-like solid electrolyte and the lithium metal is increased, whereby distribution of current at the interface between the above materials is not uniform. In addition, safety-related problems, such as generation of lithium dendrites in great quantity at the place at which physical contact is poor and increase of polarization, also occur. Various efforts to reduce interfacial resistance between the lithium metal and the garnet-like solid electrolyte have been made.

The garnet-like solid electrolyte has low ductility. When the garnet-like solid electrolyte is combined with an electrode active material, therefore, it is difficult to form an interface between the electrode active material (solid) and the garnet-like solid electrolyte (solid) through only rolling. Sintering is performed at a high temperature of 1000°C. In this case, however, lithium may volatilize, or the electrode active material and the garnet-like solid electrolyte may react with each other.

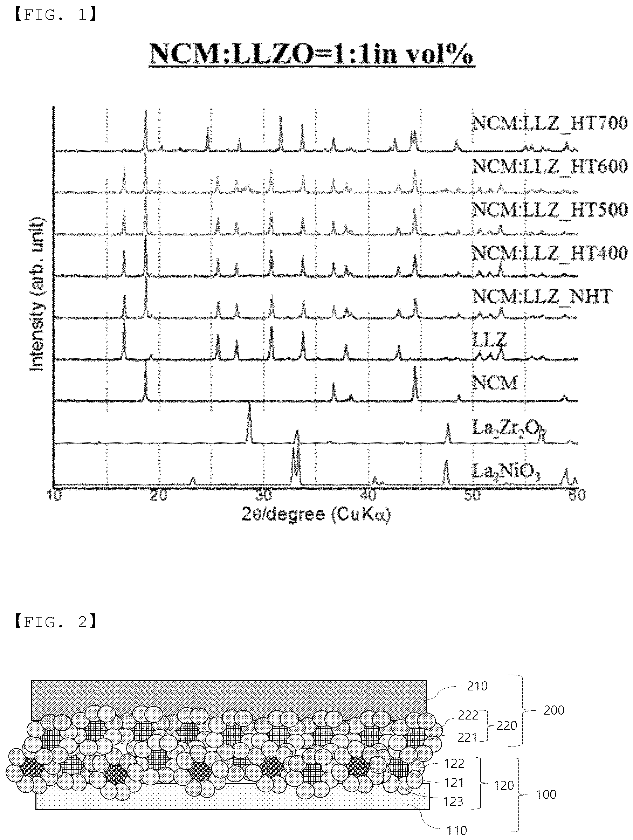

FIG. 1 shows an XRD analysis result of a mixture of a garnet-like solid electrolyte and an electrode active material according to the conventional art. FIG. 1 shows an XRD analysis result measured after NCM (Li[NiₓCo_{(1-x)/2}Mn_{(1-x)/2}]O₂; hereinafter referred to as "NCM") 811, which is a positive electrode active material, and Li₇La₃Zr₂O₁₂ (hereinafter referred to as "LLZ"), which is a garnet-like solid electrolyte, were mixed with each other in a volumetric ratio of 1:1 and the mixture was sintered (thermally treated). In FIG. 1, HT means heat treatment (sintering), and the numbers behind HT, 400, 500, 600, and 700, mean heat treatment temperatures of 400°C, 500°C, 600°C, and 700°C, respectively. NHT means that heat treatment was not performed.

Referring to FIG. 1, there is shown that, in the case in which the mixture of LLZ, used as the garnet-like solid electrolyte, and NCM, used as the positive electrode active material, is not thermally treated or is thermally treated at a low temperature, LLZ and NCM are only physically mixed with each other. The result of XRD analysis shows that the peak of LLZ and the peak of NCM are simply combined with each other. In the case in which heat treatment is performed at a high temperature of 600°C, an unknown peak due to interfacial reaction occurs, from which it can be seen that a separate material is formed.

In the case in which ionic conductivity of the material formed as the result of high-temperature heat treatment is low, the material may act as a resistance layer, which may inversely affect performance of a battery. When sintering is performed at a high temperature, a large amount of energy is consumed and lithium volatilizes, whereby performance of an all-solid-state battery is also reduced.

Since LLZ, which is a typical garnet-like solid electrolyte, reacts with moisture and carbon dioxide, whereby Li₂CO₃, which is an insulator, is formed on the surface thereof, LLZ must be carefully handled under dry inactive conditions. The insulator of Li₂CO₃ formed on the surface of the garnet-like solid electrolyte may be removed by grinding, heat treatment, acidification, etc. However, it is difficult to completely remove the insulator of Li₂CO₃, and the insulator of Li₂CO₃ is easily formed again even after removal thereof.

In Patent Document 1, a garnet-like solid electrolyte and a sintering material are mixed and sintered, or a positive electrode is formed at the mixture and sintered. However, this document does not solve a problem of side reaction between a positive electrode active material and the garnet-like solid electrolyte.

In Patent Document 2, liquid sintering due to an LBO (lithium (Li), boron (B), and oxygen (O)) based glass frit is induced at the time of sintering a garnet-like solid electrolyte, whereby densification of the sintered body is achieved. A solid electrolyte including an electrode active material is not formed, and side reaction between the electrode active material and the garnet-like solid electrolyte is not considered.

Li₃BO₃, which is frequently used as an oxide-based solid electrolyte, is thermally treated at a high temperature of 700°C or more and is combined with an electrode active material. Since ionic conductivity of Li₃BO₃ is 10⁻⁷S/cm, which is low, despite reduction in interfacial resistance, there is a definite limitation in improving performance of an all-solid-state battery.

In order to solve a fundamental problem, a garnet-like solid electrolyte having higher ionic conductivity must be applied to a positive electrode; however, a definite method capable of solving a problem of side reaction between an electrode active material and a garnet-like solid electrolyte has not yet been suggested.

### - Prior Art Documents -

Korean Patent Application Publication No. 2017-0034581 (2017.03.29) ("Patent Document 1")
Korean Patent Application Publication No. 2019-0078804 (2019.07.05) ("Patent Document 2")

### [Disclosure]

### [Technical Problem]

The present invention has been made in view of the above problems.

It is an object of the present invention to provide an all-solid-state battery including an oxide-based solid electrolyte layer, a positive electrode comprising an oxide-based solid electrolyte, and a negative electrode, wherein the all-solid-state battery includes a positive electrode having low interfacial resistance as a composite of a positive electrode active material of the positive electrode and a garnet-like solid electrolyte having high ionic conductivity, and a method of manufacturing the same.

It is another object of the present invention to provide a low-temperature sintering process having no problem of side reaction between an electrode active material and a garnet-like solid electrolyte and an all-solid-state battery including a positive electrode manufactured thereby.

### [Technical Solution]

In order to accomplish the above objects, the present invention provides an all-solid-state battery including an oxide-based solid electrolyte layer, a positive electrode including an oxide-based solid electrolyte, and a negative electrode, wherein at least one of the oxide-based solid electrolyte and positive electrode active material particles of the positive electrode is coated with a dissimilar oxide, the oxide-based solid electrolyte includes a garnet-like oxide including lithium, lanthanum, zirconium, and oxygen, the dissimilar oxide is at least one selected from the group consisting of LiBO₂, LiB₃O₅, Li₃B₂O₄, Li₂B₄O₇, Li₂B₆O₁₀, Li₂B₈O₁₃, Li₃BO₃, Li₄B₂O₅, Li₆B₄O₉, and L₁₃B₁₁O₁₈, and the oxide-based solid electrolyte and the positive electrode are sintered at 700°C or less.

In addition, the present invention provides an all-solid-state battery including an oxide-based solid electrolyte layer, a positive electrode including an oxide-based solid electrolyte, and a negative electrode, wherein at least one of the oxide-based solid electrolyte and positive electrode active material particles of the positive electrode is coated with a dissimilar oxide, the oxide-based solid electrolyte includes a garnet-like oxide including lithium, lanthanum, zirconium, and oxygen, the dissimilar oxide is a composite of Li₂CO₃ or Li₂SO₄ and at least one selected from the group consisting of LiBO₂, LiB₃O₅, Li₃B₂O₄, Li₂B₄O₇, Li₂B₆O₁₀, Li₂B₈O₁₃, Li₃BO₃, Li₄B₂O₅, Li₆B₄O₉, and Li₃B₁₁O₁₈, and the oxide-based solid electrolyte and the positive electrode are sintered at 680°C or less.

In addition, the present invention provides an all-solid-state battery including an oxide-based solid electrolyte layer, a positive electrode including an oxide-based solid electrolyte, and a negative electrode, wherein at least one of the oxide-based solid electrolyte and positive electrode active material particles of the positive electrode is coated with a dissimilar oxide, the oxide-based solid electrolyte includes a garnet-like oxide including lithium, lanthanum, zirconium, and oxygen, the dissimilar oxide is a composite of Li₂CO₃-Li₂SO₄ and at least one selected from the group consisting of LiBO₂, LiB₃O₅, Li₃B₂O₄, Li₂B₄O₇, Li₂B₆O₁₀, Li₂B₈O₁₃, Li₃BO₃, Li₄B₂O₅, Li₆B₄O₉, and Li₃B₁₁O₁₈, and the oxide-based solid electrolyte and the positive electrode are sintered at 500°C or less.

In the present invention, the positive electrode may further include an oxide-based solid electrolyte coated with the positive electrode active material which is coated with the dissimilar oxide or the positive electrode active material which is coated with the oxide-based solid electrolyte coated with a dissimilar oxide.

In the present invention, at least one of the surface of the oxide-based solid electrolyte and the surface of the positive electrode that abut each other may be coated with the dissimilar oxide.

A conductive agent may be added to the positive electrode.

Li₂CO₃ may be Li₂CO₃ generated by a surface reaction of the garnet-like oxide, and the positive electrode active material may include Li[NiₓCo_{1-x-y}Mn_{y}]O₂ (0≤x≤1.0, 0≤y≤1.0, 0≤z≤1.0, x+y+z=1.0) or LiₐNiₓCo_{y}Mn_{z}O₂ (0.6≤a≤1.2, 0≤x≤1.0, 0≤y≤1.0, 0≤z≤1.0, x+y+z=1.0).

The garnet-like oxide may have a pellet form.

In addition, the present invention provides a method of manufacturing the all-solid-state battery, the method including (S1) preparing a coating mixture including the dissimilar oxide and (S2) coating the positive electrode active material and/or the oxide-based solid electrolyte with the coating mixture of step (S1).

Coating of step (S2) may include wet coating or dry coating, and the garnet-like oxide may have a pellet form.

In the present invention, one or more constructions that do not conflict with each other may be selected and combined from among the above constructions.

### [Description of Drawings]

FIG. 1 shows an XRD analysis result of a mixture of a garnet-like solid electrolyte and an electrode active material according to the conventional art.
FIG. 2 is a schematic view of an all-solid-state battery according to the present invention.
FIG. 3 shows an XRD analysis result of a mixture of a dissimilar oxide and a garnet-like solid electrolyte according to the present invention.
FIG. 4 shows an XRD analysis result of a mixture of a dissimilar oxide and an electrode active material.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part in the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, the present invention will be described in more detail.

The present invention provides an all-solid-state battery including an oxide-based solid electrolyte layer, a positive electrode including an oxide-based solid electrolyte, and an negative electrode, wherein at least one of the oxide-based solid electrolyte and positive electrode active material particles used in the positive electrode is coated with a dissimilar oxide, the dissimilar oxide includes lithium, boron, and oxygen, the positive electrode active material is a nickel-cobalt-manganese based material, and the oxide-based solid electrolyte includes a garnet-like oxide including lithium, lanthanum, zirconium, and oxygen.

### Garnet-like oxide

The oxide-based solid electrolyte according to the present invention may be a garnet-like oxide including lithium, lanthanum, zirconium, and oxygen.

The garnet-like oxide is not particularly restricted as long as the garnet-like oxide is a compound including lithium, lanthanum, zirconium, and oxygen, and all known compounds used in the battery field may be used. For example, a material represented by the chemical formula LiₓLa_{y}Zr_{z}Oₖ (0<x, y, z, k≤12) or a material obtained by multiple-doping the material represented by the above chemical formula with Al, Ga, Sc, etc. may be used as the garnet-like oxide including lithium, lanthanum, zirconium, and oxygen. In addition, Nb or Ta may be substituted for zirconium, or Nb or Ta may be separately added. In addition to the above material, a material capable of maintaining a garnet-like structure while improving ionic conductivity may be added, or a substitute for the existing material may be used.

The garnet-like oxide is preferably Li₇La₃Zr₂O₁₂, more preferably an isometric garnet-like oxide obtained by doping Li₇La₃Zr₂O₁₂ with aluminum. The garnet-like oxide may have an ionic conductivity of 10⁻⁴ S/cm or more at room temperature.

The garnet-like oxide may have an average particle size of preferably 0.05 um to 10 µm, more preferably 0.1 um to 5 µm.

The ionic conductivity of the garnet-like oxide measured using an impedance method must be 1.0×10⁻⁴ S/cm or more.

The garnet-like oxide may be used in a pellet form. In the case in which a pellet type molded body is used, density may be improved, and therefore ionic conductivity may be improved.

The solid electrolyte including the pellet type oxide may have a porosity of 0.01 volume% or more, more specifically 0.01 to 20 volume%.

In order to use the garnet-like oxide in a pellet form, a powder type garnet-like oxide may be put in a press, and appropriate pressure may be applied to the powder type garnet-like oxide, whereby the powder type garnet-like oxide may be manufactured in a pellet form. At this time, the process may be performed at a high temperature in order to reduce interfacial resistance.

### Positive electrode active material

In the all-solid-state battery according to the present invention, the positive electrode active material is not restricted as long as the positive electrode active material is a material that causes no chemical change in the all-solid-state battery. Preferably, the all-solid-state battery according to the present invention includes a nickel-cobalt-manganese (hereinafter referred to as "NCM") based positive electrode active material. The NCM may have a structure of LiₐNiₓCo_{y}Mn_{z}O₂ (0.6≤a≤1.2, 0≤x≤1.0, 0≤y≤1.0, 0≤z≤1.0, x+y+z=1.0) . However, the present invention is not limited thereto. In addition, manganese, aluminum, copper, iron, magnesium, boron, or gallium may be substituted for cobalt.

Although not limited in the present invention, the positive electrode active material may have an average particle size of 1 nm to 30 µm.

### Dissimilar oxide

The all-solid-state battery according to the present invention may use at least one of LiBO₂, LiB₃O₅, Li₃B₂O₄, Li₂B₄O₇, Li₂B₆O₁₀, Li₂B₈O₁₃, Li₃BO₃, Li₄B₂O₃, Li₆B₄O₉, and Li₃B₁₁O₁₈ as a dissimilar oxide, or may use a composite of at least one thereof and Li₂CO₃ or Li₂CO₃-Li₂SO₄.

In addition, all compounds including lithium, boron, and oxygen may be used. In this case, titanium may be substituted for boron, and a composite including a separate compound may be formed in order to improve the effect of the dissimilar oxide.

In the case in which at least one of LiBO₂, LiB₃O₅, LiB₃O₅, Li₃B₂O₄, Li₂B₄O₇, Li₂B₄O₇, Li₂B₆O₁₀, Li₂B₈O₁₃, Li₃BO₃, Li₄B₂O₅, Li₆B₄O₉, and L₁₃B₁₁O₁₈ is used as the dissimilar oxide according to the present invention, the solid electrolyte may be sintered at 700°C or less. In the case in which a composite of at least one of the above materials and Li₂CO₃ is formed, the solid electrolyte may be sintered at 680°C or less. In the case in which a composite of at least one of the above materials and Li₂CO₃-Li₂SO₄ is formed, the solid electrolyte may be sintered at 500°C or less.

At least one of the oxide-based solid electrolyte and the positive electrode active material may be coated with the dissimilar oxide, the oxide-based solid electrolyte may be further coated with the positive electrode active material coated with the dissimilar oxide, or the positive electrode active material may be further coated with the solid electrolyte coated with the dissimilar oxide.

In addition, a positive electrode slurry including the dissimilar oxide, the oxide-based solid electrolyte, and the positive electrode active material may further include a conductive agent.

The surface of at least one of the oxide-based solid electrolyte layer and the positive electrode may be coated with the dissimilar oxide.

When the garnet-like oxide is coated with the dissimilar oxide, Li₂CO₃ may be generated as the result of surface reaction of the garnet-like oxide.

As an example, Li₂CO₃ may be formed through the following three steps.
(1)

   Li₇La₃Zr₂O₁₂ + xH₂O → Li₇₋ₓHₓLa₃Zr₂O₁₂ + xLiOH
(2)

   LiOH + H₂O → LiOH·H₂O
(3)

   2LiOH·H₂O + CO₂ → Li₂CO₃ + 3H₂O

Subsequently, LLZ having Li₂CO₃ generated therein is coated with a dissimilar oxide, such as Li₂B₄O₇, and heat treatment is performed for compounding.

The thickness of the dissimilar oxide coating layer formed on the positive electrode active material or the garnet-like oxide is preferably 1 nm to 100 nm, more preferably 1 nm to 20 nm. If the coating layer is too thick, lithium conductivity may be reduced. If the coating layer is too thin, a non-coated portion may be generated, and therefore a high-resistance region may be formed.

### Conductive agent

The conductive agent used in the electrode according to the present invention is a carbon-based conductive agent. The conductive agent is not particularly restricted as long as the conductive agent exhibits high conductivity without inducing any chemical change in a battery to which the conductive agent is applied. For example, at least one selected from the group consisting of: graphite, such as natural graphite or artificial graphite; carbon black, such as carbon black, acetylene black, Ketjen black, channel black, furnace black, lamp black, or thermal black; conductive fiber, such as carbon fiber or metallic fiber; metallic powder, such as carbon fluoride powder, aluminum powder, or nickel powder; conductive whisker, such as zinc oxide or potassium titanate; a conductive metal oxide, such as titanium oxide; and a conductive material, such as a polyphenylene derivative, may be used as the conductive agent.

### Binder

A binder used in the all-solid-state battery according to the present invention is not particularly restricted in the present invention, and a well-known material may be used. The binder may be any one or a mixture of two or more selected from the group consisting of N,N-bis[3-(triethoxysilyl)propyl]urea, polyethylene oxide (PEO), poly(vinylidene fluoride) (PVDF), and poly(vinylidene fluoride-co-hexafluoropropylene) (PVDF-co-HFP), or may be any one or a mixture of two or more selected from the group consisting of N,N-bis[3-(triethoxysilyl)propyl]urea, polyethylene oxide (PEO), poly(vinylidene fluoride) (PVDF), poly(vinylidene fluoride-co-hexafluoropropylene) (PVDF-co-HFP), conjugated dienebased rubber latex, such as acrylonitrile-based styrene butadiene rubber (SBR), acrylonitrile butadiene rubber (NBR), methyl methacrylate butadiene styrene (MBR), or butadiene rubber (BR), carboxymethyl cellulose (CMC), starch, hydroxypropyl cellulose, regenerated cellulose, polyvinyl pyrrolidone, tetrafluoroethylene, polyethylene, polypropylene, ethylene-propylene-diene terpolymer (EPDM), sulfonated EPDM, styrene butadiene rubber, fluoro rubber, and various copolymers thereof.

### Solvent

It is preferable for a solvent used in the all-solid-state battery according to the present invention to be a liquid at a processing temperature and to be inert with respect to the materials used in the positive electrode, the negative electrode, and the solid electrolyte according to the present invention. For example, one selected from the group consisting of toluene, xylene, naphtha, benzene, chlorobenzene, N-methyl pyrrolidone, acetonitrile, acrylonitrile, tetrahydrofuran, cyclopentyl methyl ether, triethylamine, tributylamine, and a mixture thereof may be used as the solvent. Preferably, aromatic hydrocarbon may be used. More preferably, toluene may be used.

For example, the amount of the solvent that is used may be 10 to 100 parts by weight, preferably 50 to 80 parts by weight, based on 100 parts by weight of the positive electrode active material.

### Positive electrode current collector

A positive electrode current collector is not particularly restricted as long as the positive electrode current collector exhibits high conductivity while the positive electrode current collector does not induce any chemical change in the all-solid-state battery. For example, the positive electrode current collector may be made of stainless steel, aluminum, nickel, titanium, or sintered carbon. Alternatively, the positive electrode current collector may be made of aluminum or stainless steel, the surface of which is treated with carbon, nickel, titanium, or silver.

### Negative electrode current collector

A negative electrode current collector is not particularly restricted as long as the negative electrode current collector exhibits high conductivity while the negative electrode current collector does not induce any chemical change in the all-solid-state battery. For example, the negative electrode current collector may be made of copper, stainless steel, aluminum, nickel, titanium, or sintered carbon. Alternatively, the negative electrode current collector may be made of copper or stainless steel, the surface of which is treated with carbon, nickel, titanium, or silver, or an aluminum-cadmium alloy. In addition, the negative electrode current collector may be configured in any of various forms, such as a film, a sheet, a foil, a net, a porous body, a foam body, and a non-woven fabric body, each of which has a micro-scale uneven pattern formed on the surface thereof in the same manner as in the positive electrode current collector.

In this case, a negative electrode current collector may be one selected from the group consisting of lithium metal, a lithium alloy, a lithium metal composite oxide, a lithium-containing titanium composite oxide (LTO), and a combination thereof. Here, an alloy of lithium and at least one metal selected from among Na, K, Rb, Cs, Fr, Be, Mg, Ca, Sr, Ba, Ra, In, Al, and Sn may be used as the lithium alloy. In addition, the lithium metal composite oxide may be formed by lithium and an oxide (MeOₓ) of any one metal (Me) selected from the group consisting of Si, Sn, Zn, Mg, Cd, Ce, Ni, and Fe. As an example, the lithium metal composite oxide may be LiₓFe₂O₃ (0<x≤1) or LiₓWO₂ (0<x≤1).

In addition, as the negative electrode active material, there may be used a metal composite oxide, such as SnₓMe₁₋ₓMe'_{y}O_{z} (Me: Mn, Fe, Pb, Ge; Me': Al, B, P, Si, Group 1, 2, and 3 elements of the periodic table, halogen; 0<x≤1; 1≤y≤3; 1≤z≤8); or an oxide, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₃O₄, or Bi₂O₃. Furthermore, a carbon-based negative electrode active material, such as crystalline carbon, amorphous carbon, or a carbon composite, may be used alone or in the form of a mixture of two or more thereof.

In addition, natural graphite, mesocarbon micro beads (MCMB) artificial graphite, mesocarbon fiber (MCF) artificial graphite, meso phase-based low-temperature sintered carbon, a non-graphitizing carbon material, or a nanotube may be used alone in the form of a mixture of two or more as the negative electrode active material.

### All-solid-state battery manufacturing method

An all-solid-state battery manufacturing method according to the present invention may include (S1) a step of preparing a coating mixture including the dissimilar oxide and (S2) a step of coating a positive electrode active material and/or an oxide-based solid electrolyte with the coating mixture of step (S1).

The positive electrode current collector and/or the solid electrolyte layer may be coated with the positive electrode active material and/or the oxide-based solid electrolyte formed through steps (S1) and (S2). After coating of the positive electrode current collector and/or the solid electrolyte layer, a step of sintering the all-solid-state battery may be performed. At this time, at least one of the surface of an oxide-based solid electrolyte layer and the surface of a positive electrode that abut each other may be coated with the dissimilar oxide of step (S1).

The dissimilar oxide, the positive electrode active material, and the oxide-based solid electrolyte have been described above.

In the present invention, a mixing method is not particularly restricted, and a well-known method may be used. Mixing may be performed through conventional mechanochemical reaction. In addition, a conventional stirrer, mixer, planetary ball mill, or mortar mixer may be used at the time of mixing. In the case in which the planetary ball mill is used, mixing may be performed at 50 to 500 rpm for 0.1 to 100 hours at 1 to 100 kWh/kg.

In addition, the oxide-based solid electrolyte of step (S2) may be a garnet-like oxide. In the case in which the positive electrode active material or the garnet-like oxide is coated with the dissimilar oxide, the dissimilar oxide may serve to prevent reaction of the above materials between the garnet-like oxide and the positive electrode active material. In the case in which only the positive electrode active material is coated with the dissimilar oxide, the garnet-like oxide may be coated with the positive electrode active material coated with the dissimilar oxide. In addition, the garnet-like oxide coated with the dissimilar oxide may be coated on the positive electrode active material coated on the positive electrode current collector.

Coating of step (S2) may be performed by wet coating or dry coating.

In the case in which mixing is simply performed without coating, the garnet-like oxide and positive electrode active material react with each other at a high temperature, whereby a resistance layer of the battery is formed, as shown in FIG. 1, which is undesirable. Consequently, it is preferable to form the positive electrode active material layer or the solid electrolyte coating layer through coating.

The dissimilar oxide, the positive electrode active material, and the garnet-like oxide may have different particle sizes. The reason for this is that, in the case in which the particle sizes thereof are different from each other, contact area is increased, whereby ionic conductivity is increased while interfacial resistance is decreased.

The all-solid-state battery manufacturing method according to the present invention may further include (S3) a step of sintering the coated garnet-like oxide obtained in step (S2) after step (S2). Sintering temperature may be changed depending on the kind of the dissimilar oxide.

The garnet-like oxide used in the present invention includes a pellet type oxide. The solid electrolyte may be formed in a pellet form using a well-known method.

The electrode of the all-solid-state battery may have a structure in which an electrode active material is formed on an electrode current collector. However, the electrode current collector may be omitted depending on the structure thereof. In the case in which the electrode is a positive electrode, the electrode current collector is a positive electrode current collector. In the case in which the electrode is a negative electrode, the electrode current collector is a negative electrode current collector.

The positive electrode and/or the solid electrolyte layer is formed by coating the positive electrode current collector and/or the solid electrolyte layer with the positive electrode active material mixture formed as described above, and the positive electrode and the solid electrolyte layer are joined to each other by pressing at a high temperature and a high pressure.

The all-solid-state battery is manufactured through a dry compression process in which an electrode and a solid electrolyte are manufactured in the form of powder and the electrode powder and the solid electrolyte powder are introduced and pressed in a predetermined mold. Manufacture of the all-solid-state battery except for the above-described composition and the method of manufacturing the same is not particularly restricted in the present invention, and a well-known method may be used.

A method of distributing an electrode slurry on a current collector and uniformly dispersing the electrode slurry using a doctor blade, a die casting method, a comma coating method, or a screen printing method may be used as a method of coating the current collector with the electrode slurry during a process of coating the electrode according to the present invention, particularly the negative electrode. In addition, the electrode slurry may be formed on a separate substrate, and the electrode slurry and the current collector may be joined to each other by pressing or lamination. At this time, the concentration or the number of coatings of a slurry solution may be controlled in order to adjust the final coating thickness.

After coating, a drying process may be performed. The drying process is a process of removing a solvent and moisture in the slurry in order to dry the slurry coated on the metal current collector. The drying process may be changed depending on the solvent that is used. As an example, the drying process is performed in a vacuum oven at 50°C to 320°C. For example, a drying method using warm air, hot air, or low-humidity air, a vacuum drying method, or a drying method using (far) infrared light or electron beams may be used as a drying method. Drying time is not particularly restricted. In general, drying is performed for 30 seconds to 24 hours.

A cooling process may be further performed after the drying process. The cooling process may be a process of performing slow cooling to room temperature such that the recrystallization structure of the binder is well formed.

In addition, if necessary, a rolling process of allowing the electrode to pass between two rolls heated to a high temperature such that the electrode is compressed to a desired thickness may be performed in order to increase capacity density of the electrode and to increase adhesion between the current collector and the active materials after the drying process. The rolling process is not particularly restricted in the present invention, and a well-known rolling process (pressing) is possible. As an example, the electrode may pass between rotary rolls, or a flat press machine may be used to perform the rolling process.

In addition, the present invention provides a battery pack including a battery cell as a unit cell and a device including the battery pack as a power source. Specifically, the battery pack may be used as a power source for a device requiring the ability to withstand high temperature, long cycle characteristics, high rate characteristics, etc. Preferred examples of the device may include a mobile electronic device, a wearable electronic device, a power tool driven by a batterypowered motor, an electric vehicle (EV), a hybrid electric vehicle (HEV), a plug-in hybrid electric vehicle (PHEV), and an energy storage system. However, the present invention is not limited thereto.

The structure and manufacturing method of the device are well known in the art to which the present invention pertains, and thus a detailed description thereof will be omitted.

Hereinafter, preferred manufacturing examples and examples will be described with reference to the accompanying drawings in order to aid in understanding of the present invention. These examples are given in order to illustrate the present invention, and do not limit the scope of the present invention.

FIG. 2 is a schematic view of an all-solid-state battery according to the present invention.

FIG. 2 shows only a positive electrode 100 and a solid electrolyte layer 200 of the all-solid-state battery according to the present invention.

The positive electrode 100 may be constituted by a positive electrode current collector 110 and a positive electrode active material layer 120, and the positive electrode active material layer 120 may include a garnet-like oxide 121, a dissimilar oxide 122, and a positive electrode active material 123. At least one of the garnet-like oxide 121 and the positive electrode active material 123 may be coated with the dissimilar oxide 122. FIG. 2 shows that the entirety of the garnet-like oxide 121 and the entirety of the positive electrode active material 123 are coated with the dissimilar oxide 122, which, however, is an illustration. A portion of the garnet-like oxide 121 or a portion of the positive electrode active material 123 may not be coated with the dissimilar oxide 122. Even in this case, it is preferable for the uncoated garnet-like oxide 121 or the uncoated positive electrode active material 123 to be surrounded by the garnet-like oxide 121 coated with the dissimilar oxide 122 or the positive electrode active material 123 coated with the dissimilar oxide 122.

Meanwhile, in the solid electrolyte layer 200, the surface of an uncoated layer 210 constituted by only a solid electrolyte may be coated with a coating layer 220 constituted by a garnet-like oxide 221 coated with a dissimilar oxide 222 (as shown in FIG. 2), may directly abut the positive electrode 100, or may be directly coated with the dissimilar oxide 222.

The garnet-like oxide 121 or 221 includes lithium, lanthanum, zirconium, and oxygen, a nickel-cobalt-manganese based positive electrode active material is used as the positive electrode active material 123, and the dissimilar oxide 122 or 222 includes lithium, boron, and oxygen.

The garnet-like oxide 121 in the positive electrode active material layer 120 may be coated with the positive electrode active material 123 coated with the dissimilar oxide 122.

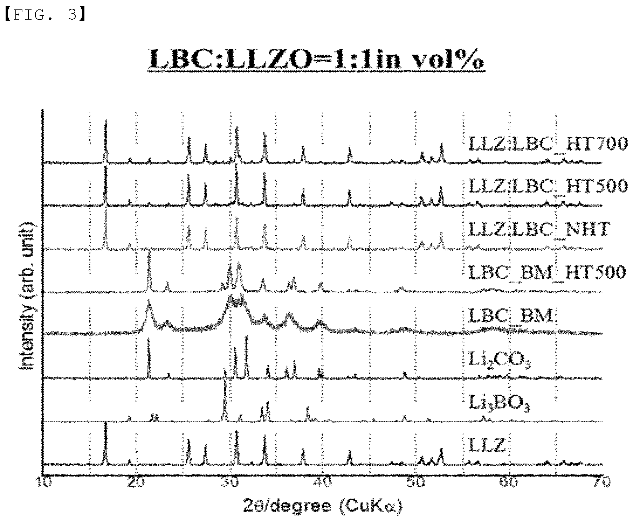

FIG. 3 shows an XRD analysis result of a mixture of a dissimilar oxide and a garnet-like solid electrolyte according to the present invention.

In FIG. 3, LLZ indicates Li₇La₃Zr₂O₁₂, and LBC indicates Li₃BO₃-Li₂CO₃. FIG. 3 shows an XRD analysis result measured after LLZ and LBC were mixed with each other in a ratio of 1:1 and the mixture was thermally treated. HT means heat treatment (sintering), and the numbers behind HT, 500 and 700, mean heat treatment temperatures of 500°C and 700°C, respectively. NHT means that heat treatment was not performed. LBC_BM is an XRD result after synthesis of LBC using a mechanochemical ball mill method.

It can be seen from FIG. 3 that, when LLZ and LBC are mixed with each other in a ratio of 1:1, a uniform XRD result is achieved without a third-phase peak even though heat treatment is performed at 700°C. In addition, it can be seen through the XRD result of LBC_BM that crystallinity of LBC is increased in proportion to an increase of the heat treatment temperature, whereby a peak occurs.

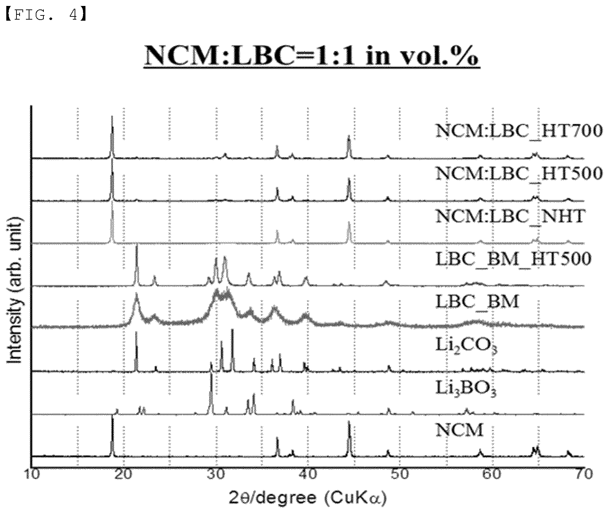

FIG. 4 shows an XRD analysis result of a mixture of a dissimilar oxide and an electrode active material.

In FIG. 4, NCM indicates NCM 811, which is a positive electrode active material, and LBC indicates Li₃BO₃-Li₂CO₃ (hereinafter referred to as "LBC"). FIG. 4 shows an XRD analysis result measured after NCM 811 and LBC were mixed with each other in a ratio of 1:1 and the mixture was thermally treated. HT means heat treatment (sintering), and the numbers behind HT, 500 and 700, mean heat treatment temperatures of 500°C and 700°C, respectively. NHT means that heat treatment was not performed. LBC_BM is an XRD result after synthesis of LBC using a mechanochemical ball mill method.

It can be seen from FIG. 4 that crystallinity of LBC is increased and thus a peak occurs without occurrence of a third-phase peak when LBC is thermally treated, as in FIG. 3.

As described above, the all-solid-state battery according to the present invention includes a positive electrode active material coated with a dissimilar oxide and/or a garnet-like oxide coated with the dissimilar oxide, whereby the all-solid-state battery may have a dense structure at a lower temperature without separate side reaction. In addition, interfacial resistance is lower than in a conventional oxide-based solid electrolyte, whereby it is possible to obtain a battery with improved performance.

Although the present invention has been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and technical idea of the present invention, and it will be obvious that such changes and modifications fall within the scope of the appended claims.

### - Description of Reference Numerals -

- 100:: Positive electrode
- 110:: Positive electrode current collector
- 120:: Positive electrode active material layer
- 121:: Garnet-like oxide
- 122:: Dissimilar oxide
- 123:: Positive electrode active material
- 200:: Solid electrolyte layer
- 210:: Uncoated layer
- 220:: Coating layer
- 221:: Garnet-like oxide
- 222:: Dissimilar oxide

### [Industrial Applicability]

According to the present invention, it is possible to prevent a garnet-like oxide having high ionic conductivity from reacting with carbon dioxide and moisture. A garnet-like oxide according to the present invention does not react with carbon dioxide and moisture in air as the result of being coated with a dissimilar oxide or by a dissimilar oxide formed on a positive electrode active material by coating.

In addition, it is possible for a garnet-like oxide-based solid electrolyte according to the present invention to form a denser interface between solids at a lower sintering temperature than in the conventional art due to a liquid sintering effect of a dissimilar oxide having a low melting point. It is possible to reduce formation of lithium dendrites due to current density improvement at the time of charging and discharging, whereby it is possible to improve safety of an all-solid-state battery.

In addition, it is possible to form a uniform interface having low resistance while inhibiting side reaction with the positive electrode active material due to the lowered sintering temperature.

It is possible to reduce energy consumption and to prevent volatilization of lithium due to the lowered sintering temperature, whereby it is possible to continuously maintain performance of the all-solid-state battery.

In an all-solid-state battery according to the present invention, it is possible to reduce interfacial resistance between a positive electrode and an oxide-based solid electrolyte layer, whereby it is possible to improve density of the all-solid-state battery. Even for the positive electrode, a garnet-like solid electrolyte having high ionic conductivity may be combined with a positive electrode active material without side reaction, whereby it is possible to improve performance of the all-solid-state battery.

## Claims

1. An all-solid-state battery comprising:
an oxide-based solid electrolyte layer;
a positive electrode comprising an oxide-based solid electrolyte; and
a negative electrode,
wherein at least one of the oxide-based solid electrolyte and positive electrode active material particles of the positive electrode is coated with a dissimilar oxide,
wherein the oxide-based solid electrolyte comprises a garnet-like oxide comprising lithium, lanthanum, zirconium, and oxygen,
wherein the dissimilar oxide is at least one selected from a group consisting of LiBO₂, LiB₃O₅, Li₃B₂O₄, Li₂B₄O₇, Li₂B₆O₁₀, Li₂B₈O₁₃, Li₃BO₃, Li₄B₂O₃, Li₆B₄O₉, and L₁₃B₁₁O₁₈, and
wherein the oxide-based solid electrolyte and the positive electrode are sintered at 700°C or less.

2. An all-solid-state battery comprising:
an oxide-based solid electrolyte layer;
a positive electrode comprising an oxide-based solid electrolyte; and
a negative electrode,
wherein at least one of the oxide-based solid electrolyte and positive electrode active material particles of the positive electrode is coated with a dissimilar oxide,
wherein the oxide-based solid electrolyte comprises a garnet-like oxide comprising lithium, lanthanum, zirconium, and oxygen,
wherein the dissimilar oxide is a composite of Li₂CO₃ or Li₂SO₄ and at least one selected from a group consisting of LiBO₂, LiB₃O₅, Li₃B₂O₄, Li₂B₄O₇, Li₂B₆O₁₀, Li₂B₈O₁₃, Li₃BO₃, Li₄B₂O₃, Li_{g}B₄O₉, and Li₃B₁₁O₁₈, and
wherein the oxide-based solid electrolyte and the positive electrode are sintered at 680°C or less.

3. An all-solid-state battery comprising:
an oxide-based solid electrolyte layer;
a positive electrode comprising an oxide-based solid electrolyte; and
a negative electrode,
wherein at least one of the oxide-based solid electrolyte and positive electrode active material particles of the positive electrode is coated with a dissimilar oxide,
wherein the oxide-based solid electrolyte comprises a garnet-like oxide comprising lithium, lanthanum, zirconium, and oxygen,
wherein the dissimilar oxide is a composite of Li₂CO₃-Li₂SO₄ and at least one selected from a group consisting of LiBO₂, LiB₃O₅, Li₃B₂O₄, Li₂B₄O₇, Li₂B₆O₁₀, Li₂B₈O₁₃, Li₃BO₃, Li₄B₂O₅, Li₆B₄O₉, and L₁₃B₁₁O₁₈, and
wherein the oxide-based solid electrolyte and the positive electrode are sintered at 500°C or less.

4. The all-solid-state battery according to any one of claims 1 to 3, wherein the positive electrode further comprises:
an oxide-based solid electrolyte coated with the positive electrode active material which is coated with the dissimilar oxide; or
a positive electrode active material coated with the oxide-based solid electrolyte which is coated with the dissimilar oxide.

5. The all-solid-state battery according to any one of claims 1 to 3, wherein at least one of a surface of the oxide-based solid electrolyte and a surface of the positive electrode that abut each other is coated with the dissimilar oxide.

6. The all-solid-state battery according to any one of claims 1 to 3, wherein a conductive agent is added to the positive electrode.

7. The all-solid-state battery according to claim 2 or 3, wherein Li₂CO₃ is Li₂CO₃ generated by a surface reaction of the garnet-like oxide.

8. The all-solid-state battery according to any one of claims 1 to 3, wherein the positive electrode active material comprises:
Li[NiₓCo_{1-x-y}Mn_{y}]O₂ (0≤x≤1.0, 0≤y≤1.0, 0≤z≤1.0, x+y+z=1.0); or
LiₐNiₓCo_{y}Mn_{z}O₂ (0.6≤a≤1.2, 0≤x≤1.0, 0≤y≤1.0, 0≤z≤1.0, x+y+z=1.0) .

9. The all-solid-state battery according to any one of claims 1 to 3, wherein the garnet-like oxide has a pellet form.

10. A method of manufacturing the all-solid-state battery according to any one of claims 1 to 3, the method comprising:
(S1) preparing a coating mixture comprising the dissimilar oxide; and
(S2) coating the positive electrode active material and/or the oxide-based solid electrolyte with the coating mixture of step (S1).

11. The method according to claim 10, wherein coating of step (S2) comprises wet coating or dry coating.

12. The method according to claim 10, wherein the garnet-like oxide has a pellet form.
